# EUROPÄISCHE PATENTSCHRIFT

(11) **EP 3 571 919 B1**
(45) Veröffentlichungstag und Bekanntmachung des Hinweises auf die Patenterteilung: **19.01.2022**
(21) Anmeldenummer: 19175927.3
(22) Anmeldetag: 22.05.2019
(51) Int. Cl.: A01D 87/12, A01F 29/00

(54) **BALLENSCHNEIDEINRICHTUNG UND ARBEITSGERÄT**
BALE CUTTING DEVICE AND WORKING TOOL
DISPOSITIF DE COUPE DE BALLES ET APPAREIL DE TRAVAIL

(30) Priorität: 24.05.2018 DE 102018208171
(43) Veröffentlichungstag der Anmeldung: 27.11.2019
(73) Patentinhaber: Deere & Company, Moline, IL 61265 (US)
(72) Erfinder: Guiet, Lionel, 68163 Mannheim (DE)
(74) Vertreter: Reichert, Christian

(56) Entgegenhaltungen:
- EP-A1- 2 732 690
- WO-A1-2010/016045
- WO-A2-00/40072
- GB-A- 2 483 988
- US-A- 3 979 077
- US-A- 4 771 670

## Beschreibung

Die vorliegende Erfindung betrifft eine Ballenschneideinrichtung mit einem um eine Schwenkachse verschwenkbaren Träger und wenigstens einer Schneidleiste und ein Arbeitsgerät mit wenigstens einem Aufnehmer.

Bekannte Ballenschneideinrichtung werden eingesetzt, um Ballen aufzuschneiden und/oder zu durchtrennen, so dass ein den Ballen bildendes Material zugänglich wird. Hierzu ist üblicherweise eine Schneidleiste vorgesehen, die an einem verschwenkbaren Träger aufgenommen ist und durch diesen an den Ballen herangebracht und in diesen hineingedrückt wird, um den Ballen und gegebenenfalls ein den Ballen umhüllendes Hüllmaterial in der Art von Netz, Folie oder Garn zu durchtrennen. Bei derartigen Ballen handelt sich beispielsweise um industrielle Ballen, z.B. aus Materialien wie Textilien, Müll etc., insbesondere aber um landwirtschaftliche Ballen aus Heu, Stroh, Silage oder einem anderen Erntegut. Ballenschneideinrichtungen werden an industriellen und/oder landwirtschaftlichen Fahrzeugen, wie beispielsweise an Traktoren, Ladern, Baggern etc. eingesetzt. Bekannte Ballenschneideinrichtungen erfordern häufig den Einsatz eines speziellen Anbaurahmens, sind oft sperrig und/oder machen es notwendig, dass ein Hüllmaterial nach Abschluss das Schneidvorgangs manuell entfernt wird. Die US 3,979,077 und die US 4,771,670 offenbaren Ballenschneideinrichtungen mit einer Schneidleiste und einem um eine Schwenkachse verschwenkbaren Träger.

Die der Erfindung zugrunde liegende Aufgabe wird daher darin gesehen, eine Ballenschneideinrichtung, ein Arbeitsgerät und ein Verfahren vorzusehen, durch welche die vorgenannten Nachteile überwunden werden.

Die Aufgabe wird erfindungsgemäß durch die Lehre der Patentansprüche 1 und 8 gelöst. Weitere vorteilhafte Ausgestaltungen und Weiterbildungen der Erfindung gehen aus den Unteransprüchen hervor.

Diesbezüglich weist eine Ballenschneideinrichtung mit einem um eine Schwenkachse verschwenkbaren Träger wenigstens eine Schneidleiste auf, die an dem Träger zumindest im Wesentlichen in Richtung einer Längserstreckung des Trägers beweglich aufgenommen wird, so dass ein Ballen durch die Schneidleiste möglichst vollständig durchtrennt werden kann. Da sich die Schneidleiste entlang des Trägers bewegt, ergibt sich eine möglichst gerade und/oder saubere Schnittkante, wodurch der Ballen gleichmäßig geteilt und/oder ein den Ballen umhüllendes Hüllmaterial einfach entfernt werden kann. Erfindungsgemäss kann der Träger wenigstens eine Stellung einnehmen, in der die Schneidleiste der Schwenkachse bezogen auf einen Ballenmittelpunkt eines Ballens zumindest im Wesentlichen gegenüberliegend an und/oder in einen Ballen eingreifen kann. Dies kann die Krafteinleitung in die Schneidleiste begünstigen und ermöglicht einen ziehenden Schnitt. Es ist denkbar, eine derartige Ballenschneideinrichtung werksseitig oder auch nachträglich an einem Arbeitsgerät vorzusehen, ein Arbeitsgerät entsprechend umzurüsten oder eine Ballenschneideinrichtung als ein Wechselwerkzeug auszubilden. Dies kann die Krafteinleitung in die Schneidleiste begünstigen und ermöglicht einen ziehenden Schnitt. Eine besonders kompakte Bauform ergibt sich, wenn der Träger zumindest bereichsweise teleskopisch ausgebildet ist.

Weist der Träger wenigstens zwei Tragarme auf, so kann sich auf jeder Seite eines zu schneidenden Ballens ein Tragarm erstrecken. Die Schneidleiste wird vorzugsweise zwischen den Tragarmen aufgenommen, so dass sich eine gleichmäßige Kräfteverteilung ergibt bzw. die Schneidleiste in einfacher Weise gleichmäßig geführt werden kann. Besonders günstig ist es, wenn der Träger bzw. die Tragarme (jeweils) einen Tragteil und wenigstens einen weiteren Tragteil aufweis(t)en, der mit mit Bezug auf den Tragteil über eine, vorzugsweise in der Art eines Langlochs ausgebildete Führung verschiebbar vorgesehen ist. Auf diese Weise können die Tragteile insbesondere teleskopisch ein- bzw. ausgefahren werden, wodurch bei einer maximalen Ausladung des Trägers eine möglichst kompakte Bauform erzielt werden kann. Eine solche ist besonders während eines Transports der Ballenschneideinrichtung günstig oder wenn diese nicht im Einsatz ist. Vorzugsweise weist die Ballenschneideinrichtung wenigstens einen, in der Art eines insbesondere doppeltwirkenden Hydraulikmotors ausgebildeten Schneidenmotor auf, mittels dem die Schneidleiste, der Träger/die Tragarme und/oder die Tragteile mit Bezug aufeinander, insbesondere translatorisch bewegt werden werden kann/können, wobei der Schneidenmotor vorzugsweise an wenigstens einem der Tragteile angreift. Die Ballenschneideinrichtung kann mit nur einem Schneidenmotor ausgestattet sein, vorzugsweise sind aber zwei, insbesondere jeweiligen Tragarmen zugeordnete und/oder an diesen angebrachte Schneidenmotore vorgesehen.

Ist wenigstens ein Zugmittelgetriebe vorgesehen, das eine Bewegung des Schneidenmotors an wenigstens einen Tragteil und/oder die Schneideleiste überträgt, so kann dies dazu beitragen, die Tragteile und/oder die Schneidleiste zumindest im Wesentlichen synchronisiert und/oder mittels nur eines Schneidenmotors zu bewegen.

Optional können an dem Träger Mittel zur Handhabung von Ballen vorgesehen sein, so dass die Ballenschneideinrichtung auch zur Handhabung eines Ballens zum Einsatz kommen kann. Derartige Mittel können vorzugsweise wenigstens eine Eingriffs- und eine Außereingriffsstellung einnehmen, so dass sie beispielsweise während eines Schneidens bzw. Durchtrennens des Ballens durch die Ballenschneideinrichtung nicht in den Ballen eingreifen. Es kann vorgesehen sein, dass die Mittel durch die Schneidleiste bzw. deren Bewegung zumindest aus ihrer Eingriffs- in ihre Außereingriffsstellung gebracht werden können. Vorzugsweise sind die Mittel in Richtung ihrer Eingriffsstellung vorgespannt, beispielsweise federbelastet.

Besonders günstig ist es, wenn ein Arbeitsgerät mit wenigstens einem Aufnehmer mit einer derartigen Ballenschneideinrichtung ausgestattet ist, wobei die Ballenschneideinrichtung vorzugsweise an dem Aufnehmer schwenkbar aufgenommen ist. Bei dem Aufnehmer kann es sich um eine Gabel, eine Schaufel, einen Greifer oder jedes andere geeignet Gerät im insbesondere industriellen wie auch landwirtschaftliche Einsatz handeln. Das Arbeitsgerät ist insbesondere in der Art eines Anbaugeräts ausgebildet oder bildet einen Bestandteil eines derartigen Anbaugeräts. Es ist denkbar, das Arbeitsgerät werksseitig oder auch nachträglich mit einer Ballenschneideinrichtung auszurüsten, es umzurüsten oder eine Ballenschneideinrichtung als ein Wechselwerkzeug vorzusehen. Das Arbeitsgerät ist vorzugsweise geeignet zur Verwendung an einem industriellen oder insbesondere landwirtschaftlichen Fahrzeug. Bei dem Fahrzeug kann es sich beispielsweise um einen Traktor, einen Lader, einen Teleskoplader oder ein ähnliches Arbeitsfahrzeug handeln.

In einem Verfahren zum Betrieb eines derartigen Arbeitsgeräts wird die Schneidleiste der Ballenschneideinrichtung aus einer ersten, der Schwenkachse benachbarten in zumindest eine weitere, von der Schwenkachse, vorzugsweise maximal, beabstandete Stellung bewegt und im Anschluss derart an den Ballen herangebracht, dass die Ballenschneideinrichtung an den Ballen an- bzw. in diesen eingreift, um den Ballen vorzugsweise zumindest im Wesentlichen hälftig zu durchtrennen.

Anhand der Zeichnung, die ein Ausführungsbeispiel der Erfindung zeigt, werden nachfolgend die Erfindung sowie weitere Vorteile und vorteilhafte Weiterbildungen der Erfindung und Ausgestaltungen der Erfindung näher beschrieben und erläutert.

Es zeigt:
- Fig. 1: ein landwirtschaftliches Arbeitsfahrzeug mit einem eine Ballenschneideinrichtung aufweisenden Arbeitsgerät ,
- Fig. 2: das Arbeitsgerät und die Ballenschneideinrichtung gemäß Figur 1 in einer perspektivischen Darstellung,
- Fig. 3: eine Seitenansicht eines der Tragarme der Ballenschneideinrichtung aus Figur 2,
- Fig. 4a-h: das Arbeitsgerät in einer perspektivischen Darstellung, wobei die Ballenschneideinrichtung in unterschiedlichen Stellungen dargestellt wird,
- Fig. 5a-b: zwei alternative Ausgestaltungen eines Hydraulikkreises für ein derartiges Arbeitsgerät,
- Fig. 6: eine vergrößerte Darstellung des Bereichs I aus Figur 5b und
- Fig. 7a-b: zwei alternative Ausgestaltungen eines Hydraulikkreises für ein derartiges Arbeitsgerät.

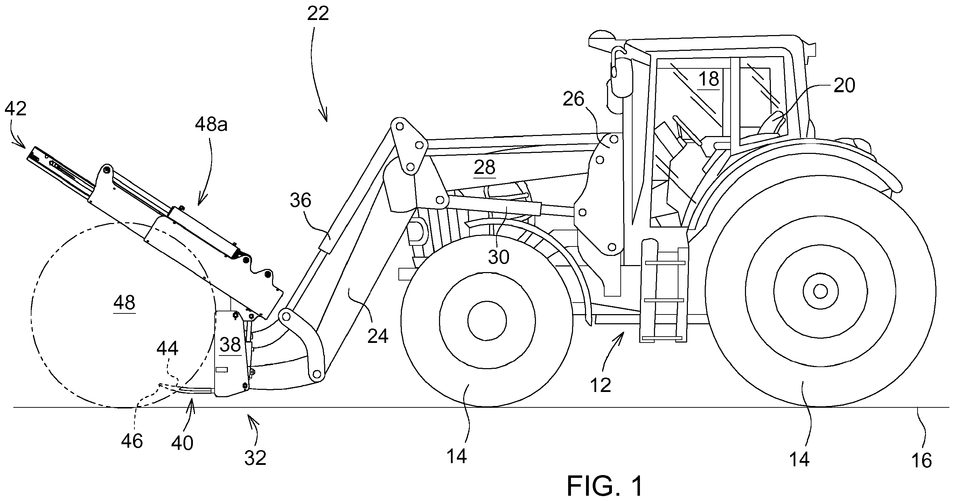

In der Figur 1 der Zeichnung wird ein landwirtschaftliches Arbeitsfahrzeug 10 in der Art eines Traktors schematisch dargestellt. Das Arbeitsfahrzeug 10 ist selbstfahrend ausgebildet und weist einen Rahmen 12 auf, welcher sich über Räder 14 auf dem Untergrund 16 abstützt. Darüber hinaus ist an dem Arbeitsfahrzeug eine Kabine 18 mit einem Bedienersitz 20 für eine Bedienungsperson vorgesehen.

An dem Arbeitsfahrzeug ist eine Ladereinrichtung 22 in der Art eines Frontladers vorgesehen. Die Ladereinrichtung 22 umfasst eine beidseitig an die Seiten des Arbeitsfahrzeugs 10 anbaubare Laderschwinge 24, wobei die Laderschwinge 24 gemäß dem gezeigten Ausführungsbeispiel mittels einer mit dem Rahmen 12 verbundenen Anbaukonsole 26 an dem Arbeitsfahrzeug 10 ankoppelbar ist.

Die Laderschwinge 24 umfasst beidseitig des Arbeitsfahrzeugs 10 parallel verlaufende Trägerarme 28, die über eine nicht gezeigte Querstrebe miteinander verbunden sind, und ist über hydraulische Hubzylinder 30, die sich ebenfalls beidseitig des Arbeitsfahrzeugs 10 erstrecken, verschwenkbar. An einem freien Ende 32 der Laderschwinge 24 wird ein Arbeitsgerät 34 mittels eines hydraulischen Schwenkzylinders 36 schwenkbar aufgenommen.

Das Arbeitsgerät 34 weist einen mit der Laderschwinge 24 verbindbaren Anbauträger 38, einen Aufnehmer 40 und eine Ballenschneideinrichtung 42 auf. Der Aufnehmer 40 ist gemäß dem vorliegenden Ausführungsbeispiel in der Art einer mehrere, sich zumindest im Wesentlichen starr von dem Anbauträger 38 weg erstreckende Zinken 44 aufweisenden Gabel 46 ausgebildet, die geeignet ist, einen Ballen 48, insbesondere einen rundzylindrischen, landwirtschaftlichen Pressballen bestehend aus Erntegut aufzunehmen, diesen zu handhaben und/oder zu transportieren. Der Aufnehmers 40 kann aber auch andersartig, beispielsweise als Greifer oder als Schaufel etc. ausgebildet und/oder geeignet ausgebildet sein, anderes Material, wie z.B. Schüttgut, Erntegut, Erde etc. oder auch Ballen anderer Form, wie beispielsweise Quaderballen, oder industrielle Ballen aufzunehmen und/oder zu handhaben.

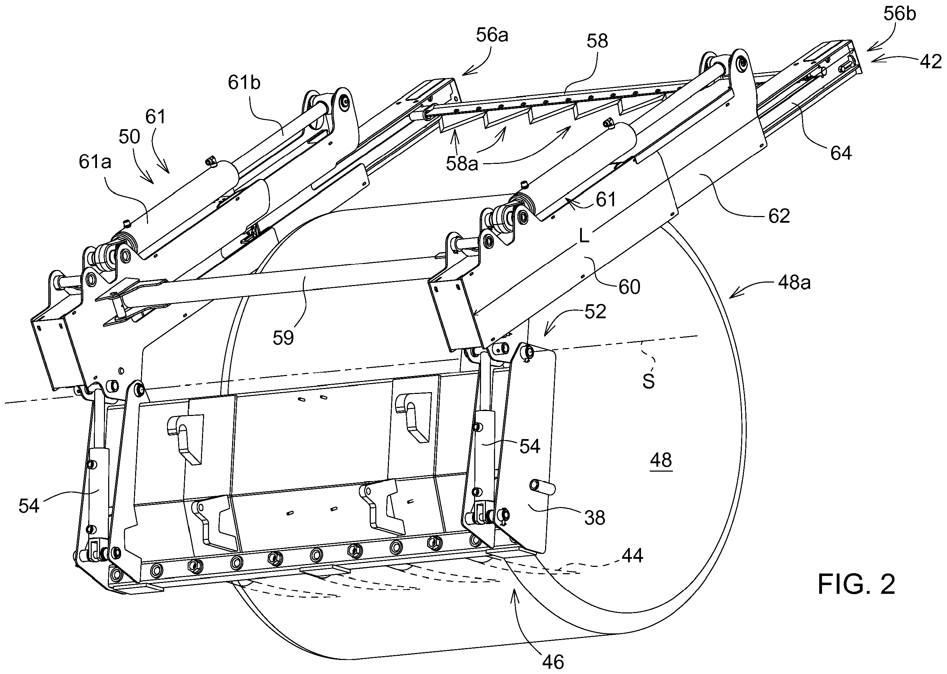

Es wird nun auch auf die Figur 2 der Zeichnung Bezug genommen, in der das Arbeitsgerät 34 in einer perspektivischen Darstellung gezeigt wird. Die Ballenschneideinrichtung 42 weist einen Träger 50 auf, der über ein Gelenk 52 mittels eines in der Art eines doppeltwirkenden Hydraulikzylinders ausgebildeten Schwenkmotors 54 um eine Schwenkachse S schwenkbar an dem Anbauträger 38 vorgesehen ist und sich von der Schwenkachse S weg erstreckt (Längserstreckung L).

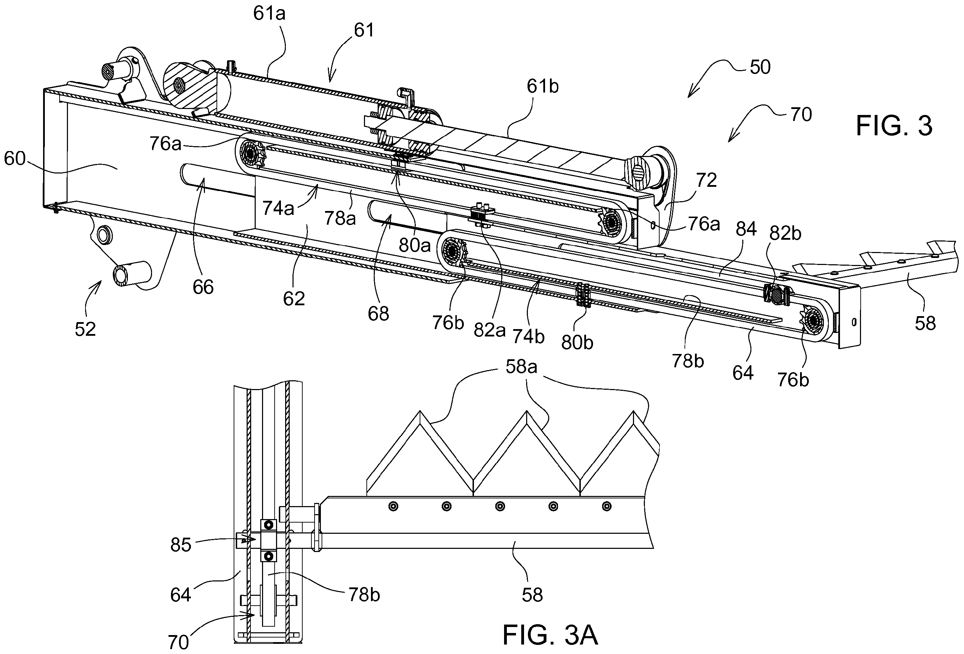

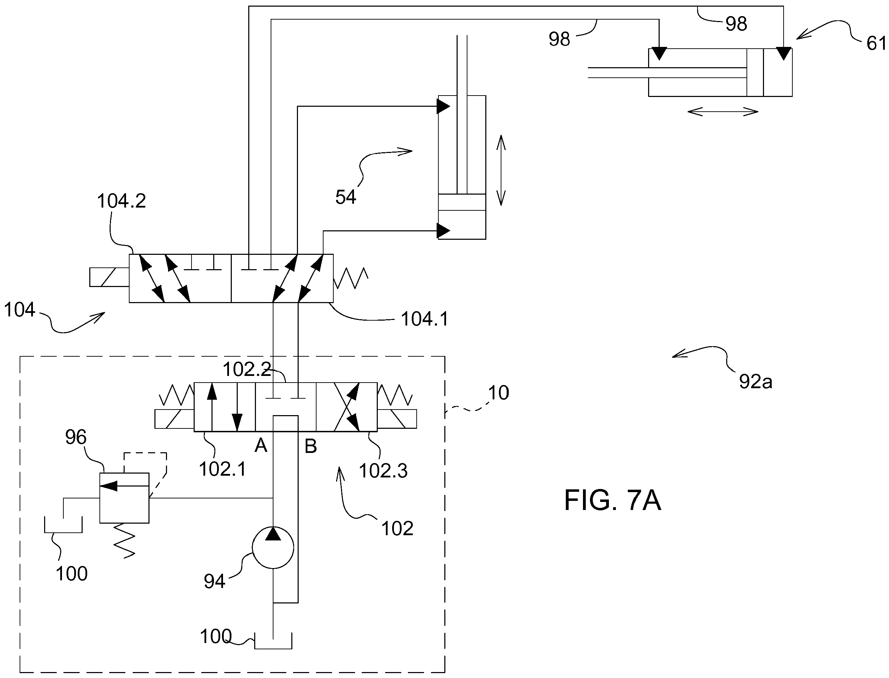

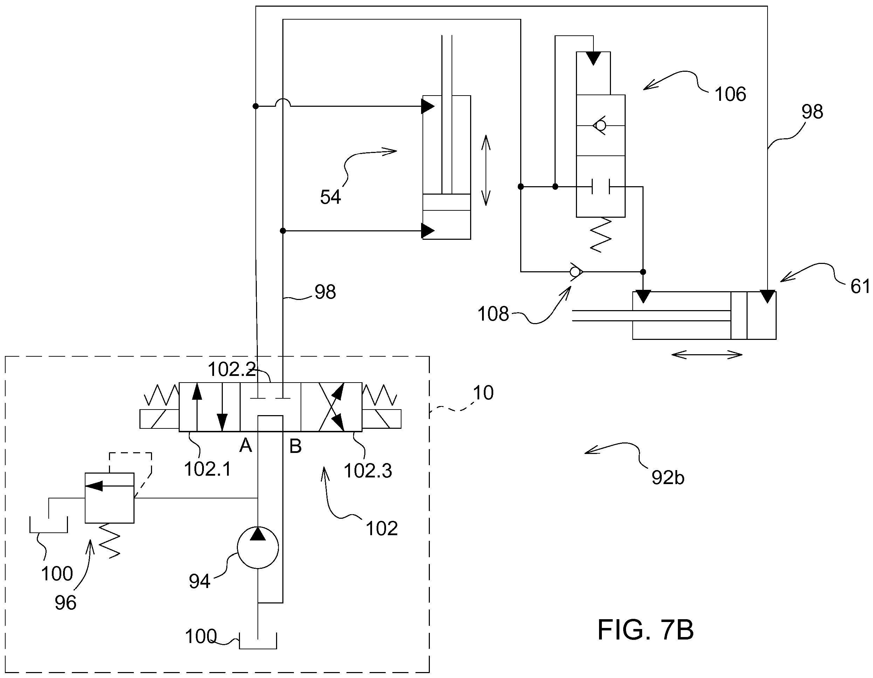

Der Träger 50 weist einen linken und einen rechten Tragarm 56a, b auf, zwischen denen sich eine Schneidleiste 58 erstreckt, die mit mehreren Messern 58a (siehe Figur 3a) besetzt ist. In einem dem Anbauträger 38 zugewandten Bereich ist ein die Tragarme 56a, b verbindendes Torsionsrohr 59 vorgesehen, dass dazu beitragen soll, dass die Tragarme 56a, b die gleiche Winkelposition einnehmen. Darüber hinaus ist an den Tragarmen 56a, b jeweils ein Schneidenmotor 61 vorgesehen, der in der Art eines doppeltwirkenden Hydraulikmotors mit einem Hydraulikzylinder 61a und einem Hydraulikkolben 61b ausgebildet ist. Auch der Schneidenmotor 61 wird von der an dem Arbeitsfahrzeug 10 vorgesehenen Hydraulikquelle mit Druck beaufschlagt (siehe hierzu ebenfalls Figuren 7a und b).

Die Tragarme 56 weisen gemäß der Darstellung in Figur 3 jeweils einen ersten, mit dem Gelenk 52 verbundenen Tragteil 60 sowie einen zweiten und einen dritten, bezogen auf den ersten Tragteil 60 verschieblich vorgesehenen Tragteil 62 und 64 auf. Der zweite Tragteil 62 ist über eine in dem ersten Tragteil 60 vorgesehene Führung 66, die in der Art eines sich in Längserstreckung L des Trägers 50 erstreckendes Langlochs ausgebildet ist, verschieblich an dem ersten Tragteil 60 gelagert. Der dritte Tragteil 64 wiederum ist über eine in dem zweiten Tragteil 66 vorgesehene Führung 68, die ebenfalls als ein Langloch ausgebildet ist, an dem zweiten Tragteil 62 verschieblich gelagert. Der Schneidenmotor 61 greift einenends mit seinem Hydraulikzylinder 61a an dem ersten Tragteil 60 sowie anderenends, über seinen Hydraulikkolben 61b in einem dem Anbauträger 38 abgewandten Bereich 70 über eine Lasche 72 an dem zweiten Tragteil 62 an.

An dem zweiten und dem dritten Tragteil 62, 64 ist jeweils ein Zugmittelgetriebe 74a, b vorgesehen. Die Zugmittelgetriebe 74a, b entsprechen sich in Aufbau und Funktionsweise, weshalb deren Bauteile im Folgenden mit entsprechenden Bezugszeichen versehen sind. Das Zugmittelgetriebe 74a weist zwei in Längserstreckung des Trägers 50 beabstandete Zahnräder 76a, b auf, welche von einem endlosen Antriebsmittel 78a, b, in der Art einer Kette, umschlungen werden. Das Antriebsmittel 78a ist an einem Punkt 80 mit dem ersten Tragteil 60 und einem von dem ersten Punkt 80a beabstandeten Punkt 82a mit dem dritten Tragteil 64 derart fest verbunden, dass der dritte Tragteil 64 durch das Antriebsmittel 78a zusammen mit bzw. zumindest im Wesentlichen synchronisiert mit dem zweiten Tragteil 62 bewegt wird, wenn dieses durch den Schneidenmotor 61 mit Bezug auf den ersten Tragteil 60 bewegt wird.

Das Antriebsmittel 78b des zweiten Zugmittelgetriebes 74b wiederum ist an einem Punkt 80b mit dem zweiten Tragteil 62 und in einem von dem Punkt 80b beabstandeten Punkt 82b mit der ebenfalls in der als ein Langloch ausgebildeten Führung 84 verschieblich aufgenommenen Schneidleiste 58 fest verbunden, so dass die Schneidleiste 58 durch das Antriebsmittel 78b in der Führung 84 im Wesentlichen synchronisiert mit dem dritten Tragteil 64 bewegt wird, wenn dieser durch das Antriebsmittel 78a mit Bezug auf den zweiten Tragteil 62 bewegt wird.

Um Längenabweichungen zwischen den Tragarmen 56 ausgleichen zu können, ist es vorteilhaft, wenn eine Verbindung 85 zwischen der Schneidleiste 58 und dem zugehörigen Zugmittelgetriebe 74b ein gewisses Spiel zulässt, beispielsweise indem diese, wie dies in Figur 3a gezeigt wird, in der Art eines Kugelgelenks ausgebildet ist.

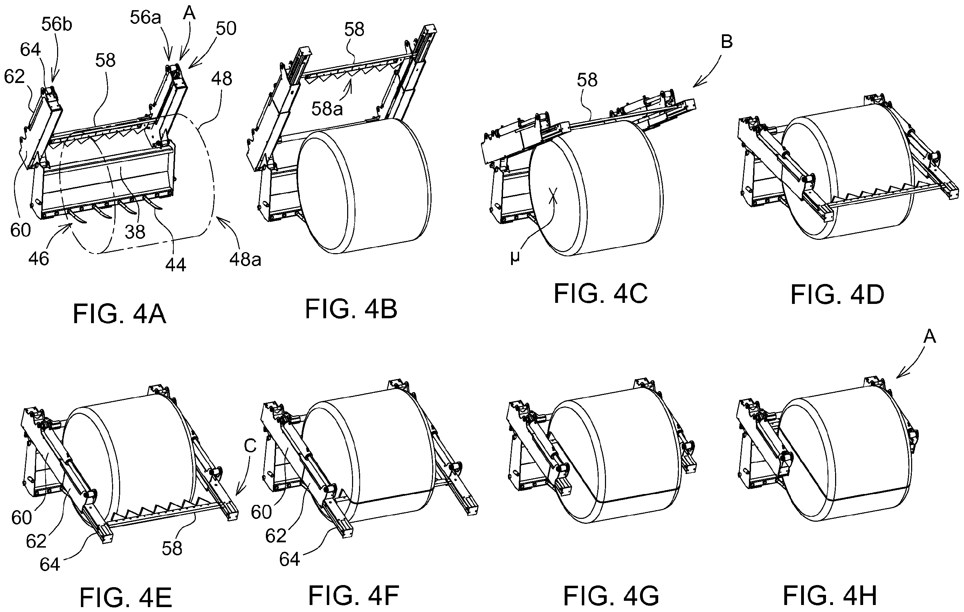

Es wird nun auch auf die Figuren 4a bis 4h der Zeichnung Bezug genommen, in der die Ballenschneideinrichtung 42 in unterschiedlichen Stellungen gezeigt wird. Gemäß Figur 4a nehmen die Tragteile 60, 62, 64 und die Schneidleiste 58 zur Aufnahme eines Ballens 48 eine eingefahrene Stellung A ein, in der sich der zweite Tragteil 62, der dritte Tragteil 64 und die Schneidleiste 58 in ihrer jeweiligen Führung 66, 68 und 84 in der dem Anbauträger 38 nächsten Stellung befinden. Ist der Ballen 48 durch die Zinken der Gabel 46 aufgenommen (Figur 4b), so bewegt der Schneidenmotor 61 den zweiten Tragteil 62 sowie über die Zugmittelgetriebe 74a und b auch den dritten Tragteil 66 sowie die Schneidleiste 58 in ihrer jeweiligen Führung 66, 68 und 84 in ihre dem Anbauträger 38 abgewandte Stellung B (Fig. 4c). Gemäß der Darstellung in den Figuren 4c bis 4e verschwenkt der Träger 50 mittels des Antriebs 54, derart, dass die Schneidleiste 58 in eine bezogen auf den Ballen 48 bzw. einen Ballenmittelpunkt M der Schwenkachse S zumindest im Wesentlichen gegenüberliegende Stellung C gebracht wird (Fig. 4e). Im Anschluss wird die Schneidleiste 58 in der Führung 84 und die zweiten und dritten Tragteile 62, 64 der Tragarme 56 mittels des Schneidenmotors 61 in Längsrichtung L auf die Schwenkachse S bzw. den Anbauträgers 38 zu bewegt, so dass die Schneidleiste 58 zuerst ein gegebenenfalls den Ballen umhüllendes Hüllmaterial 48a schneidet und dann den Ballen 48 zumindest im Wesentlichen hälftig teilt.

Optional kann vorgesehen sein, dass die Schneidleiste 58 in einer, vorzugsweise oberhalb des Ballenmittelpunkts M angeordneten Stellung (siehe Figur 4c) nur derart an den Ballen 48 herangebracht wird, dass ihre Messer 58a nur in den Ballen 48 bzw. das den Ballen 48 umhüllende Hüllmaterial eingreifen, dieses aber nicht durchtrennen, wodurch der Ballen 48 zum Transport durch die Ballenschneideinrichtung 42, insbesondere zum Transport, stabilisiert bzw. gesichert werden kann.

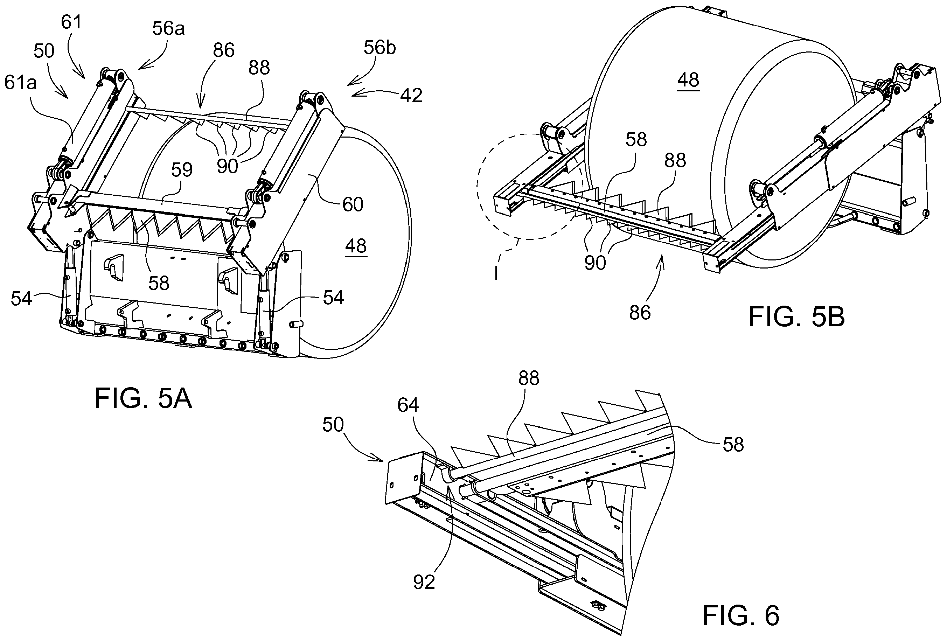

Es wird nun auch auf die Figuren 5a und b Bezug genommen, in der die Ballenschneideinrichtung 42 ausgestattet mit einer optionalen Greifeinrichtung 86 gezeigt wird. Die Greifeinrichtung 86 weist eine sich zwischen den Tragarmen 56 erstreckende Greifleiste 88 mit in etwa gleichmäßig beabstandeten Zinken 90 auf, die eine erste, in Figur 5a gezeigte Stellung, in der die Zinken sich von den Tragarmen 56 derart weg in Richtung eines Ballens 48 erstrecken, dass sie in den Ballen 48 eingreifen können, und eine zweite, in Figur 5b gezeigte Stellung einnehmen können, in der die Zinken sich von dem Ballen 48 weg bzw. im Wesentlichen fluchtend mit den Tragarmen 56 ausgerichtet sind und in der sie nicht in den Ballen 48 eingreifen können.

Die Greifleiste 88 ist hierzu wie in Figur 6 gezeigt mit dem dritten Tragteil 64 über einen Schwenkarm 92 derart in Richtung ihrer in Figur 5a gezeigten Stellung vorgespannt verbunden, dass sie wie in Figur 6 gezeigt, durch die Wirkung der Schneidleiste 58 in ihre in Figur 5b gezeigte Stellung verschwenkt werden kann.

In den Figuren 7a und b werden zwei Hydraulikkreisläufe 92a, b gezeigt, die geeignet sind, den Schwenkmotor 55 und den Schneidenmotor 61 entsprechend dem in den Figuren 4a bis h gezeigten Verfahren anzusteuern, wobei entsprechende Bauteile in den Figuren im Folgenden mit den gleichen Bezugszeichen bezeichnet werden.

Gemäß der Darstellung in den Figuren 5a und b wird der jeweilige Hydraulikkreislauf 92a von einer an dem Arbeitsfahrzeug 10 vorgesehenen Druckquelle 94 mit Druck beaufschlagt, wobei in üblicher Weise ein Überdruckventil 96 vorgesehen ist, über das bei einem einen Grenzdruck übersteigenden Druck in den Leitungen 98 Hydraulikmittel in ein Reservoir 100 abfließen kann. An dem Arbeitsfahrzeug 10 ist darüber hinaus ein Steuerventil 102, das in der Art eines 4/3 Wege Ventils ausgebildet ist und Stellungen 102.1, 102.2 und 102.3 einnehmen kann, vorgesehen, welches Ausgänge A und B aufweist, die entsprechend der jeweiligen Stellung des Steuerventils 102 selektiv mit Druck beaufschlagt werden können. Ist das Arbeitsgerät 34 nicht operativ, so nimmt das Steuerventil 102, seine Neutralstellung 102.2 ein, in der keiner der Anschlüsse A, B mit Druck beaufschlagt wird.

Gemäß dem in Figur 7a gezeigten Ausführungsbeispiel ist dem Steuerventil 102 ein Umschaltventil 104, das in der Art eines 6/2 Wegeventils ausgebildet ist und das Stellungen 104.1 und 104.2 einnehmen kann, nachgeordnet, welches es erlaubt, entsprechend seiner Stellung selektiv entweder den Schwenkmotor 54 oder den Schneidenmotor 61 mit Druck zu beaufschlagen. Um die Tragarme 56 nach oben zu verschwenken, nimmt das Steuerventil 102 seine Stellung 102.1 ein, in der der Ausgang A mit Hydraulikdruck beaufschlagt wird. Das Umschaltventil 104 nimmt seine Stellung 104.1 ein. Um die Tragarme 56 nach unten zu verschwenken, nimmt das Steuerventil 102 seine Stellung 102.3 ein, in der der Ausgang B mit Druck beaufschlagt wird. Soll der Träger 50 ausgefahren bzw. die Schneidleiste 58 in ihre Stellung B bzw. C gebracht werden, so wird das Umschaltventil 104 in seine entsprechende Stellung 104.2 gebracht, während das Steuerventil 102 in seiner Stellung 102.1. verbleibt. Um den Ballen 48 zu durchtrennen, wird das Steuerventil 102 in seine Stellung 102.3 gebracht, während sich das Umschaltventil 104 in seiner Stellung 104.2 befindet. Die Betätigung des Steuerventils 102 und des Umschaltventils 104 kann hier im Wesentlichen durch eine Bedienungsperson über entsprechende, vorzugsweise in der Kabine 18 angeordnete, aber nicht gezeigte Steuerelement, wie beispielsweise einen Joystick und/oder entsprechende Schaltelemente erfolgen. Es ist aber auch eine (semi-)automatische Steuerung, beispielsweise mittels einer ebenfalls nicht dargestellten Regel- bzw. Steuereinrichtung, insbesondere einer Regel- bzw. Steuereinrichtung des Arbeitsfahrzeugs 10 denkbar.

Es wird nun auf die Figur 7b Bezug genommen, in der ein alternativ ausgeführter Hydraulikkreis 92b dargestellt wird. Dieser weist ebenfalls eine Druckquelle 100 auf, welche ein Steuerventil 102 mit Druck beaufschlagt. Dem Steuerventil 102 ist hier allerdings kein Umschaltventil nachgeordnet, vielmehr sind der Schwenkmotor 54 und der Schneidenmotor 61 parallel geschaltet, wobei dem Schneidenmotor 61 ein Zuschaltventil 106, in der Art eines Druckfolgerventils und ein Rückschlagventil 108 derart vorgeschaltet sind, dass der Schneidenmotor 61 einfährt, um die Schneidleiste 58 in Richtung des Ballens 48 zu bewegen, wenn sich das Steuerventil 102 in seiner Stellung 102.3 befindet und in den Leitungen 98 ein entsprechender Druck ansteht, der das Zuschaltventil 106 öffnet, beispielsweise da der Träger 50 an einem nicht gezeigten Wegbegrenzer zur Anlage kommt.

## Patentansprüche

1. Ballenschneideinrichtung (42) mit einem um eine Schwenkachse (S) verschwenkbaren Träger (50) und wenigstens einer Schneidleiste (58), wobei die Schneidleiste (58) an dem Träger (50) zumindest im Wesentlichen in Richtung einer Längserstreckung (L) des Trägers (50) beweglich aufgenommen ist, **dadurch gekennzeichnet, dass** der Träger (50) wenigstens eine Stellung (C) einnehmen kann, in der die Schneidleiste (58) der Schwenkachse (S), bezogen auf einen Ballenmittelpunkt (M) eines Ballens (48), zumindest im Wesentlichen gegenüberliegend an und/oder in einen Ballen eingreifen kann.

2. Ballenschneideinrichtung nach Anspruch 1, **dadurch gekennzeichnet, dass** der Träger (50) zumindest bereichsweise teleskopisch ausgebildet ist.

3. Ballenschneideinrichtung nach einem der vorherigen Ansprüche, **dadurch gekennzeichnet, dass** der Träger (50) wenigstes zwei Tragarme (56a,b) aufweist, wobei die Schneidleiste (58) vorzugsweise zwischen den Tragarmen (56a,b) aufgenommen wird.

4. Ballenschneideinrichtung nach Anspruch 3, **dadurch gekennzeichnet, dass** der Träger (50) bzw. die Tragarme (56a,b) jeweils einen ersten Tragteil (60, 62) und wenigstens einen weiteren Tragteil (62, 64) aufweisen, der mit Bezug auf den ersten Tragteil (60, 62) über eine Führung (66, 68) verschiebbar vorgesehen ist.

5. Ballenschneideinrichtung nach einem der vorherigen Ansprüche, **gekennzeichnet durch** wenigstens einen, vorzugsweise in der Art eines insbesondere doppeltwirkenden Hydraulikmotors ausgebildeten Schneidenmotor (61), mittels dem die Schneidleiste (58), der Träger (50), die Tragarme (56a,b) und/oder die Tragteile (60, 62, 64) mit Bezug aufeinander vorzugsweise translatorisch bewegt werden werden kann/können, wobei der Schneidenmotor (61) vorzugsweise an wenigstens einem der Tragteile (60, 62, 64) angreift.

6. Ballenschneideinrichtung nach Anspruch 4 oder 5, **dadurch gekennzeichnet, dass** wenigstens ein Zugmittelgetriebe (74a, b) vorgesehen ist, dass eine Bewegung des Schneidenmotors (61) an wenigstens einen Tragteil (62, 64) und/oder die Schneideleiste (58) überträgt.

7. Ballenschneideinrichtung nach einem der vorherigen Ansprüche, **dadurch gekennzeichnet, dass** an dem Träger (50) eine Greifeinrichtung (86) zur Handhabung von Ballen vorgesehen ist, die vorzugsweise wenigstens eine Eingriffs- und eine Außereingriffsstellung einnehmen kann.

8. Arbeitsgerät (34) mit wenigstens einem Aufnehmer (40), **gekennzeichnet durch** eine Ballenschneideinrichtung (42) nach einem der vorherigen Ansprüche, wobei die Ballenschneideinrichtung (42) an dem Aufnehmer (40) vorzugsweise schwenkbar aufgenommen ist.

## Claims

1. Bale cutting device (42) having a carrier (50), which is pivotable about a pivot axis (S), and at least one cutter bar (58), wherein the cutter bar (58) is accommodated on the carrier (50) so as to be movable at least substantially in the direction of a longitudinal extent (L) of the carrier (50), **characterized in that** the carrier (50) can take up at least one position (C) in which the cutter bar (58) can engage on and/or in a bale at least substantially opposite the pivot axis (S), with respect to a bale centre point (M) of a bale (48).

2. Bale cutting device according to Claim 1, **characterized in that** the carrier (50) is telescopic at least in regions.

3. Bale cutting device according to either of the preceding claims, **characterized in that** the carrier (50) has at least two carrying arms (56a, b), wherein the cutter bar (58) is preferably accommodated between the carrying arms (56a, b).

4. Bale cutting device according to Claim 3, **characterized in that** the carrier (50) and the carrying arms (56a, b) each have a first carrying part (60, 62) and at least one further carrying part (62, 64) which is provided so as to be displaceable with respect to the first carrying part (60, 62) via a guide (66, 68).

5. Bale cutting device according to one of the preceding claims, **characterized by** at least one cutter motor (61) which is preferably designed in the manner of an in particular double-action hydraulic motor and by means of which the cutter bar (58), the carrier (50), the carrying arms (56a, b) and/or the carrying parts (60, 62, 64) can be moved preferably in a translatory manner with respect to one another, wherein the cutter motor (61) acts preferably on at least one of the carrying parts (60, 62, 64).

6. Bale cutting device according to Claim 4 or 5, **characterized in that** at least one traction mechanism (74a, b) is provided which transmits a movement of the cutter motor (61) to at least one carrying part (62, 64) and/or to the cutter bar (58).

7. Bale cutting device according to one of the preceding claims, **characterized in that** the carrier (50) is provided with a gripping device (86) for handling bales, said gripping device preferably being able to take up at least one engagement position and one disengagement position.

8. Working implement (34) having at least one pick-up (40), **characterized by** a bale cutting device (42) according to one of the preceding claims, wherein the bale cutting device (42) is preferably accommodated pivotably on the pick-up (40).

## Revendications

1. Dispositif de coupe de balles (42) muni d'un support (50) pivotant autour d'un axe de pivotement (S) et d'au moins une barre de coupe (58), la barre de coupe (58) étant reçue sur le support (50) de manière mobile au moins essentiellement dans la direction d'une extension longitudinale (L) du support (50), **caractérisé en ce que**
le support (50) peut prendre au moins une position (C), dans laquelle la barre de coupe (58) peut s'engager sur et/ou dans une balle au moins essentiellement à l'opposé de l'axe de pivotement (S), par rapport à un centre de balle (M) d'une balle (48).

2. Dispositif de coupe de balles selon la revendication 1, **caractérisé en ce que** le support (50) est configuré sous forme télescopique au moins dans certaines zones.

3. Dispositif de coupe de balles selon l'une quelconque des revendications précédentes, **caractérisé en ce que** le support (50) comprend au moins deux bras porteurs (56a,b), la barre de coupe (58) étant de préférence reçue entre les bras porteurs (56a,b).

4. Dispositif de coupe de balles selon la revendication 3, **caractérisé en ce que** le support (50) ou les bras porteurs (56a,b) comprennent chacun une première partie porteuse (60, 62) et au moins une autre partie porteuse (62, 64), qui est prévue pour pouvoir coulisser par rapport à la première partie porteuse (60, 62) par l'intermédiaire d'un guide (66, 68).

5. Dispositif de coupe de balles selon l'une quelconque des revendications précédentes, **caractérisé par** au moins un moteur de coupe (61), de préférence configuré à la manière d'un moteur hydraulique, en particulier à double effet, au moyen duquel la barre de coupe (58), le support (50), les bras porteurs (56a,b) et/ou les parties porteuses (60, 62, 64) peuvent être déplacés les uns par rapport aux autres, de préférence en translation, le moteur de coupe (61) agissant de préférence sur au moins une des parties porteuses (60, 62, 64) .

6. Dispositif de coupe de balles selon la revendication 4 ou 5, **caractérisé en ce qu'**au moins une transmission à moyen de traction (74a,b) est prévue, qui transmet un mouvement du moteur de coupe (61) à au moins une partie porteuse (62, 64) et/ou à la barre de coupe (58).

7. Dispositif de coupe de balles selon l'une quelconque des revendications précédentes, **caractérisé en ce qu'**un dispositif de préhension (86) pour la manipulation de balles est prévu sur le support (50), qui peut de préférence prendre au moins une position engagée et une position désengagée.

8. Appareil de travail (34) muni d'au moins un récepteur (40), **caractérisé par** un dispositif de coupe de balles (42) selon l'une quelconque des revendications précédentes, le dispositif de coupe de balles (42) étant de préférence reçu de manière pivotante sur le récepteur (40).
